# EUROPEAN PATENT SPECIFICATION

(11) **EP 1 619 731 B1**
(45) Date of publication and mention of the grant of the patent: **19.05.2010**
(21) Application number: 04254354.6
(22) Date of filing: 21.07.2004
(51) Int. Cl.: H01M 2/04, H01M 10/36

(54) **Electrochemical cell**
Elektrochemische Zelle
Cellule électrochimique

(43) Date of publication of application: 25.01.2006
(60) Divisional application: 09158779.0
(73) Proprietor: Seiko Instruments Inc., Chiba-shi, Chiba 261 (JP)
(72) Inventor: Watanabe, Shunji, c/o SII Micro Parts Ltd, Sendai-shi, Miyagi (JP); Nakamura, Yoshibumi, c/o SII Micro Parts Ltd, Sendai-shi, Miyagi (JP); Onodera, Hideharu, c/o SII Micro Parts Ltd, Sendai-shi, Miyagi (JP); Sakai, Tsugio, c/o SII Micro Parts Ltd, Sendai-shi, Miyagi (JP)
(74) Representative: Sturt, Clifford Mark

(56) References cited:
- JP-A- 59 012 557
- US-A- 5 053 294
- US-A- 5 397 366
- US-A1- 2001 012 193
- US-A1- 2003 003 356

## Description

The present invention concerns an electrochemical cell capable of being surface-mounted such as a non-aqueous electrolyte cell and an electric double layer capacitor utilizing the principle of the electric double layer.

Electrochemical cells such as non-aqueous electrolyte cells and electric double layer capacitors have been used so far as back-up power sources for clock function, back-up power sources for semiconductor memories, spare power sources for electronic devices such as microcomputers or IC memories, cells for solar clocks and motor driving power sources and, in recent years, they have also been studied, for example, as power sources for electric motor cars and auxiliary power storage units for energy conversion storage systems.

In electrochemical cells such as non-aqueous electrolyte cells and electric double layer capacitors, requirement for large capacity and current has been decreased by the development of non-volatile semiconductor memories and lowering of consumption power in clock-function devices. Requirement has been increased for non-aqueous electrolyte cells and electric double layer capacitors has rather for reduction of thickness or reflow soldering (method of previously coating a soldering cream to a portion on a printed substrate to be applied with soldering and mounting parts to the portion, or supplying small soldering balls (soldering bumps) to a portion to be soldered after mounting parts and passing a printed substrate mounting the parts thereon in a furnace of a high temperature atmosphere set to a temperature higher than the melting point of the solder, for example, at 200 to 260°C for the portion to be soldered, thereby melting the solder to conduct soldering).

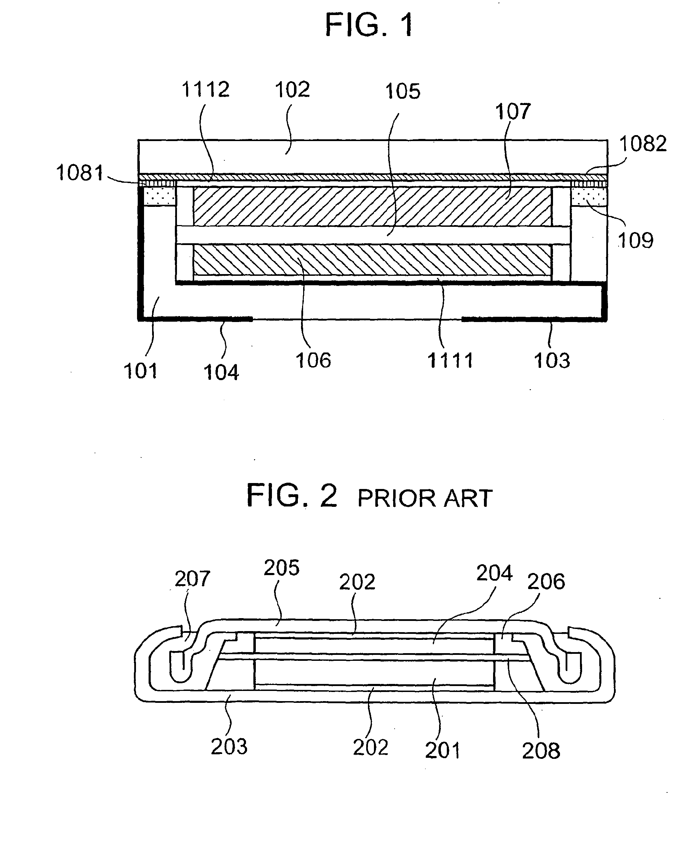

Fig. 2 shows an existent electrochemical cell. A positive electrode comprising a positive electrode active substance 201 and an electrode current collector 202, and a negative electrode comprising a negative electrode active substance 204 and an electrode current collector 202 are separated by a separator 208 and retained together with an electrolyte 206 by a positive electrode case 203 and a negative electrode case 205. The positive electrode case 203 and the negative electrode case 205 are caulked and sealed by way of a gasket 207. In the existent electrochemical cell, since the cross section has a circular shape such as coin or a button it is necessary that terminals, etc. have to be welded previously to the casing for conducting reflow soldering, which increased the cost in view of increase in the number of parts and increase in the number of manufacturing steps. Further, a space for the terminal has to be provided on a substrate to impose a limit on the size reduction.

While an electrochemical cell of a square shape has also been studied, it has become difficult to take a sealing space along with reduction of the size.
[Patent Document 1]
JP-A No. 2001-216952

An electrochemical cell of a square shape can not be sealed by crimping the case different from round shape cell. Therefore, it has been obliged for sealing to bond a sealing plate by some or other means to an upper portion of a concave vessel. The bonding method included a method of using adhesives, hot press bonding, laser welding, supersonic welding, and resistance welding.

However, since the non-aqueous electrolyte cell or electric double layer capacitor contains an electrolyte (usually a solution) in the inside, it was impossible to attain sealing at a high reliability unless a margin is provided for the bonded portion to some extent.

For example, in a case of placing a brazing material such as a brazing material or a soldering material of a shape substantially identical with the edge of a concave vessel to the edge thereof, sandwiching the same by using a sealing plate, heating the sealing plate at a temperature higher than the melting point of the brazing material or the soldering material and pressing them to apply sealing, no sufficient sealing could be attained since the liquid electrolyte solution present inside was heated and would leach to the outside unless there is sufficient margin for the bonded portion.

US 5397366 discloses an electrochemical storage cell including a ceramic housing frame with a flat plate solid ceramic electrolyte bonded to a internal shoulder of the housing frame with a glassy seal. A metallic weld ring is bonded to each end of the housing frame. Each weld ring has a welding flange disposed parallel to a respective end of the housing frame and also has a bonding flange. The bonding flange lies parallel and adjacent to an internal surface of the housing frame if the coefficient of thermal expansion of the weld ring is less than that of the housing frame, and parallel and adjacent to an external surface of the housing frame if the coefficient of thermal expansion of the weld ring is greater than that of the housing frame. A glassy seal is formed between the bonding flange of each weld ring and the respective adjacent surface of the housing frame. The glassy seals are formed by heating an assembly of the components to the glass transition temperature of the glassy seal material to effect bonding and then slowly cooling to minimize thermal stresses.

For solving the subject described above, according a first aspect of the present invention there is provided a method of manufacturing an electrochemical cell comprising the steps of: providing a concave vessel containing a positive electrode, a negative electrode, a separator for separating the positive electrode and the negative electrode and a liquid electrolyte; providing a metal layer disposed on the edge of the concave vessel; providing a sealing plate for sealing the concave vessel, the sealing plate having a heat expansion coefficient approximate with that of the concave vessel; and characterised by bonding the concave vessel and the sealing plate via the metal layer by parallel seam resistance welding.

According to a second aspect of the present invention, there is provided an electrochemical cell comprising: paired electrodes having a positive electrode and a negative electrode; a separator for separating the positive electrode and the negative electrode; a liquid electrolyte; a concave vessel containing the paired electrodes, the separator and the liquid electrolyte; a metal layer disposed on the edge of the concave vessel; a sealing plate for sealing the concave vessel, wherein the sealing plate has a heat expansion coefficient approximate with that of the concave vessel, and characterised in that the concave vessel and the sealing plate are bonded via the metal layer by parallel seam resistance welding; and characterised by a positive electrode current collector made from aluminum disposed on a bottom surface inside the concave vessel, the bottom surface opposing the sealing plate.

Preferably, a conductive layer mainly composed of carbon is disposed on the positive electrode current collector.

Suitably, the separator is made of non-woven fabrics comprising, as the main ingredient, polyphenylene sulfide, polyetheretherketone or glass fibers.

Embodiment of the invention will now be described by way of further example only and with reference to the accompanying drawings, in which:
Fig. 1 is a cross sectional view of an aqueous electrolyte cell or electric double layer capacitor according to the present invention;
Fig. 2 is a cross sectional view of an existent non-aqueous electrolyte cell or electric double layer capacitor;
Fig. 3 is a cross sectional view in a case where the thickness of a metal layer is more than the total thickness for a negative electrode active substance 107 and a separator 105;
Fig. 4 is a cross sectional view of a non-aqueous electrolyte cell or electric double layer capacitor in a case of providing a step inside a concave vessel 101 of the invention; and
Fig. 5 is a cross sectional view of a non-aqueous electrolyte cell or electric double layer capacitor in a case of providing a step inside a concave vessel 101 of the invention.

The present invention is to be described for a typical structure with reference to Fig. 1. In the non-aqueous electrolyte cell or electric double layer capacitor of the invention, it is effective to make the shape, mainly, as a rectangular parallel piped form for reducing the ratio of mounting are to the space in surface mounting.

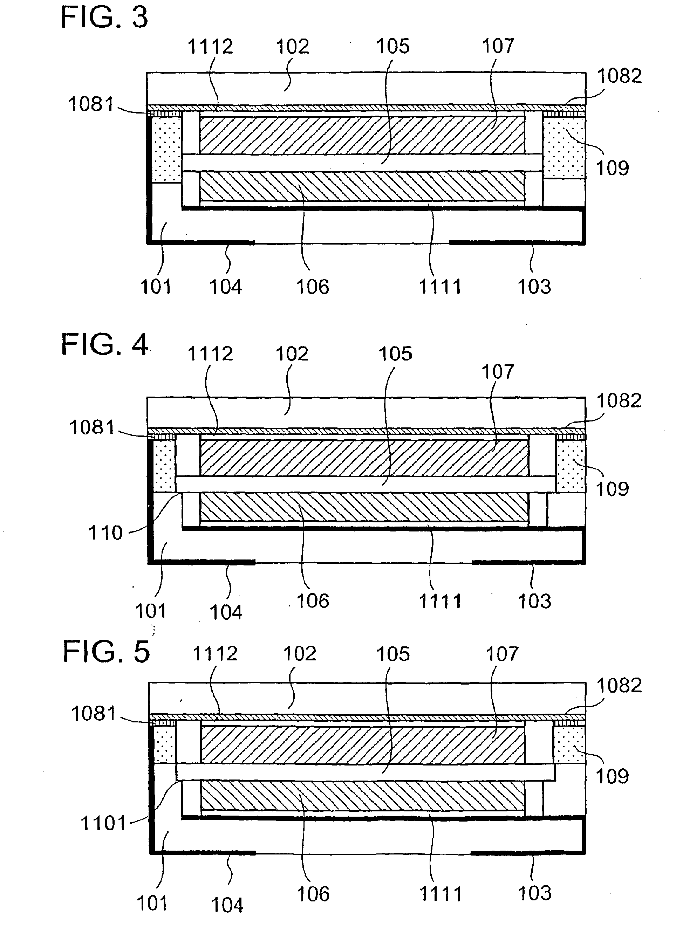

Fig. 1 is a cross sectional view of a non-aqueous electrolyte cell or electric double layer capacitor of the invention in the rectangular parallel piped form. A concave vessel 101 is made of alumina prepared by printing tungsten on a green sheet, placing a metal ring 109 made of Coval (alloy comprising Co: 17, Ni: 29, Fe: balance) thereon and sintering them. Further, a connection terminal A 103 and a connection terminal B 104 are applied with nickel/gold plating, and nickel and gold plating was applied as a brazing material 1081 (brazing material) on the metal ring 109. An Ag-solder, a Ni-solder or an Al-solder is suited to joint the concave vessel 101 and the metal ring 109. Further, the thickness of the metal layer (metal ring 109 and brazing material 1081) situated at the edge of the concave vessel 101 is made less than the total thickness for the negative electrode active substance 107 and the separator 105. In a case where the thickness of the metal layer is more than the total thickness for the negative electrode active substance 107 and the separator 105, the metal layer and the positive electrode active substance 106 may possibly be in contact with each other, failing to function as the non-aqueous electrolyte cell or electric double layer capacitor. Fig. 3 shows a cross sectional view in a case where the thickness of the metal layer is more than the total thickness for the negative electrode active substance 107 and the separator 105. When the position for the positive electrode active substance 106 is displaced by the scattering in the production step, it may possibly be in contact with the metal ring 109 to cause internal short-circuit.

The metal ring 109 is electrically connected by a tungsten layer passing through the lateral side on the left of the Fig. 1 to the connection terminal B 104.

While the connection terminals A, B reach the outer bottom of the concave vessel and, even in a case where it remains on the lateral side of the vessel, it can be soldered with the substrate by the wetting with the solder.

A metal layer of tungsten used for wirings as the electrode current collector is disposed for the entire surface at the bottom inside the concave vessel and it was penetrated through the wall of the concave vessel and connected electrically to the connection terminal A 103.
The electrode current collector and the positive electrode active substance 106 are bonded by a carbon-containing conductive adhesive 1111. There is no particular requirement of bonding the electrode current collector and the positive electrode active substance 106 and it may be merely placed thereon. The positive electrode comprises the positive electrode active substance 106.

Nickel plating to form a brazing material 1082 was applied to a portion of the sealing plate 102 on the side of the vessel. The sealing plate 102 and the negative electrode active substance 107 were previously bonded by a carbon-containing conductive adhesive 1112. The negative electrode comprises the negative electrode active substance 107. The pair of the positive electrode and the negative electrode form paired electrodes.

After containing the positive and negative electrodes, the separator 105 and the electrolyte solution inside the vessel and covering by the sealing plate 102, welding was conducted for the sealing plate 102 on every opposed two sides by a parallel seam welder utilizing the principle of resistance welding. Sealing at high reliability was obtained by the method described above.

The concave vessel 101 is preferably made of an insulator and a heat resistant material such as a heat resistant resin, glass, ceramic or ceramic glass. As a manufacturing method, wirings may be applied by conductor printing to glass or glass ceramic with low melting point and laminated, and can be baked at low temperature. Alternatively, it may be laminated with an alumina green sheet by conductor printing and can be sintered.

It is preferred that the material for the sealing plate and the metal ring 109 have a heat expansion coefficient approximate to that of the concave vessel 201.

For example, in a case of using alumina with a heat expansion coefficient of 6.8 x 10⁻⁶/°C for the concave vessel 101, Coval with a heat expansion coefficient 5.2 x 10⁻⁶/°C is used as the metal ring and the sealing plate.

Further, it is preferred that Coval identical with that for the metal ring is used also for the sealing plate 102 in order to improve the reliability after welding. This is because the plate may be heated after welding when it is surface mounted to the substrate(circuit board) of an equipment, that is, during reflow soldering.

Further, a portion of the wirings to form the electrode current collector is preferably made of tungsten, palladium, silver, platinum or gold that has a good corrosion-resistance and can be formed by a thick film method. Further, aluminum, titanium or carbon can also be used. In the case of using wirings at the bottom face of the concave vessel 101 as an electrode current collector on the positive electrode side, gold, aluminum or tungsten is particularly preferred. This is for avoiding melting of the material when a plus potential is applied by the use of a material of high withstanding voltage. Further, for improving the conduction between the electrode and the wirings, use of a carbon containing conductive adhesive is effective. Further, in a case of using a material of low withstanding voltage, it is effective to coat a conductive adhesive containing a carbon solely to the metal of the electrode current collector for the entire surface and then bake the same to harden to form the conductive layer. In a case of using aluminum to coat the electrode current collector, thermal spraying or plating from a normal temperature molten salt (butyl pyridinium chloride plating bath, imidazolium chloride bath or vapor deposition) can be utilized.

To the portion for the contact terminals A 103 and the contact terminal B 104, a layer of nickel, gold, tin or solder is preferably disposed for soldering with the substrate(circuit board). Also for the edge of the concave vessel 101, it is preferred to dispose a layer of nickel or gold having good affinity with the bonding material. The layer forming method can include, for example, plating and gas phase method such as vapor deposition.

It is effective to provide a nickel and/or gold film as the brazing material to the surface bonded with the metal ring 109 and the sealing plate 102. While the melting point of gold is 1063°C and the melting point of nickel is 1453°C, the melting point can be lowered to 1000°C or lower by forming an alloy of gold and nickel. The method of forming the layer can include, for example, plating, a gas phase method such as vapor deposition, cladding or a thick film method using printing. A thick film method using plating or printing is particularly preferred in view of the cost.

It is, however, necessary to decrease impurity elements such as P, B, S, N, and C in the layer of the brazing material to 10% or less. Particularly, a care has to be taken in a case of using plating. For example, in electroless plating, they tend to intrude as P from sodium hypophosphite as a reducing agent and B from dimethylamine borane. Further, in electrolytic plating, since they may possibly be intruded from additives such as a brighteners or anions, a care has to be taken. It is necessary to restrict the intruding impurities to 10% or less by adjusting the amount of the reducing agent, the additives and the like. If they are incorporated by 10% or more, intermetallic compounds are formed to the bonded surface to cause cracks.

In a case of using nickel for the brazing material 1082 on the side of the sealing plate 102, gold is used preferably for the brazing material 1081 on the side of the concave vessel 101. The gold to nickel ratio is preferably between 1:2 and 1:1 and the welding temperature is lowered by lowering of the melting point of the alloy to improve the bondability as well.

For the welding of the bonded portion, parallel seam welding utilizing the resistance welding method can be used. After provisionally securing the sealing plate 102 and the concave vessel 101 by spot welding, a roller type electrode is pressed against the opposed two sides of the sealing plate 102 and current is supplied to conduct welding according to the principle of the resistance welding. Sealing can be attained by welding the four sides of the sealing plate 102. Since current is supplied pulsatively while rotating the roller electrode, seam-like state is obtained after welding. Complete sealing can not be attained unless the pulse width is controlled such that individual welding traces by pulses overlap to each other.

In the welding for the cell or the capacitor containing the electrolyte (liquid), parallel seam welding utilizing the resistance welding method is particularly preferred, because the method has less thermal effect for the vaporization and leakage of the electrolyte solution in the cell than the other methods.

The separator used is preferably a heat resistant no-woven fabric. For example, in a separator such as made of a rolled porous film, it is heat resistant but it shrinks in the rolling direction by the heat upon seam welding utilizing the resistance welding method. As a result, it tends to cause internal short-circuit. Separators using heat resistant resins or glass fibers were satisfactory with less shrinkage. As the resin, PPS (polyphenylene sulfide) and PEEK (polyetheretherketone) were favorable. Glass fibers were particularly effective. Further, a porous ceramics and polyfluoro-resin body can also be used.

For preventing the internal short-circuit, it is effective to provide a step inside the concave vessel 101 and dispose a separator on the step. As shown in Fig. 4, the thickness of the metal ring 109 is reduced to less than the wall on the lateral side of the concave vessel 101 to form a step 110 and the separator was disposed on the step. This could greatly decrease the internal short-circuit. Further, it was also effective to provide a step 1101 in the wall on the lateral side of the concave vessel 101 as shown in Fig. 5.

The shape of the non-aqueous electrolyte cell or electric double layer capacitor in the invention is basically optional. The shape of the existent electric double layer capacitor obtained by crimping and sealing shown in Fig. 2 is restricted substantially to a circular shape. Accordingly, in a case where it is intended to arrange on a substrate(circuit board) together with other electronic parts most of which are in a rectangular shape, a dead space was inevitably formed wastefully. Since the electric double layer capacitor of the invention can be designed also as a rectangular shape and has no protrusions such as terminals, it can be disposed efficiently on a substrate.

According to the non-aqueous electrolyte cell or electric double layer capacitor of the invention, since the connection terminals are integrated with the concave vessel and disposed the outer bottom of the vessel, space on the substrate(circuit board) can be saved. Further, they can cope with reflow soldering by constituting them by heat resistant material.

## Claims

1. A method of manufacturing an electrochemical cell comprising the steps of:
providing a concave vessel (101) containing a positive electrode (106), a negative electrode (107), a separator (105) for separating the positive electrode (106) and the negative electrode (107) and a liquid electrolyte;
providing a metal layer (109, 1081) disposed on the edge of the concave vessel (101);
providing a sealing plate (102) for sealing the concave vessel (101), the sealing plate (102) having a heat expansion coefficient approximate with that of the concave vessel (101); and **characterised by**
bonding the concave vessel (101) and the sealing plate (102) via the metal layer (109, 1081) by parallel seam resistance welding.

2. A method of manufacturing an electrochemical cell according to claim 1, wherein the metal layer (109, 1081) comprises a metal ring (109) and a brazing material (1081), and the metal ring (109) has a heat expansion coefficient approximate with that of the concave vessel (101).

3. A method of manufacturing an electrochemical cell according to claim 1, wherein the concave vessel (101) comprises ceramics or ceramic glass.

4. A method of manufacturing an electrochemical cell according to claim 2, wherein the metal ring (109) comprises an alloy containing cobalt, nickel and iron, and the brazing material (1081) is a nickel and/or gold film formed on the metal ring (109).

5. A method of manufacturing an electrochemical cell according to claim 1, wherein the sealing plate (102) comprises a metal in which a brazing material (1082) is formed at the surface on the side bonded with the concave vessel (101).

6. A method of manufacturing an electrochemical cell according to claim 5, wherein the metal of the sealing plate (102) comprises an alloy containing cobalt, nickel and iron, and a brazing material (1082) formed at the surface on the side bonded with the concave vessel (101) is a nickel and/or gold film.

7. A method of manufacturing an electrochemical cell according to claim 1, further comprising providing a step (110) inside the concave vessel (101) and disposing the separator (105) on the step (110).

8. A method of manufacturing an electrochemical cell according to claim 1, further comprising disposing an electrode current collector at a bottom surface inside the concave vessel (101).

9. A method of manufacturing an electrochemical cell according to claim 8, wherein the electrode current collector comprises a material mainly comprising elements selected from tungsten, aluminum, titanium, carbon, palladium, silver, platinum and gold.

10. A method of manufacturing an electrochemical cell according to claim 8, further comprising providing a layer (1111) having conductivity mainly comprising carbon on the electrode current collector at the bottom surface inside the concave vessel (101).

11. A method of manufacturing an electrochemical cell according to claim 1, wherein the separator (105) comprises a non-woven fabric.

12. A method of manufacturing an electrochemical cell according to claim 1, wherein the main ingredient of the separator (105) comprises polyphenylene sulfide, polyetheretherketone, polyfluoro-resin, or glass fibers.

13. An electrochemical cell comprising:
paired electrodes (106, 107) having a positive electrode (106) and a negative electrode (107);
a separator (105) for separating the positive electrode (106) and the negative electrode (107);
a liquid electrolyte;
a concave vessel (101) containing the paired electrodes (106, 107), the separator (105) and the liquid electrolyte;
a metal layer (109, 1081) disposed on the edge of the concave vessel (101);
a sealing plate (102) for sealing the concave vessel (101), wherein the sealing plate (102) has a heat expansion coefficient approximate with that of the concave vessel (101), and
**characterised in that** the concave vessel (101) and the sealing plate (102) are bonded via the metal layer (109, 1081) by parallel seam resistance welding; and **characterised by**
a positive electrode current collector made from aluminum disposed on a bottom surface inside the concave vessel (101), the bottom surface opposing the sealing plate (102).

14. An electrochemical cell according to claim 13, wherein a layer (1111) having conductivity mainly comprising carbon is further provided on the positive electrode current collector at the bottom surface inside the concave vessel (101).

15. An electrochemical cell according to claim 13, wherein the separator (105) comprises a non-woven fabric.

16. An electrochemical cell according to claim 13, wherein the main ingredient of the separator (105) comprises polyphenylene sulfide, polyetheretherketone, polyfluoro-resin, or glass fibers.

## Patentansprüche

1. Verfahren zum Herstellen einer elektrochemischen Zelle, umfassend die folgenden Schritte:
Bereitstellen eines konkaven Gefäßes (101), das eine positive Elektrode (106), eine negative Elektrode (107), einen Separator (105) zum Trennen der positiven Elektrode (106) und der negativen Elektrode (107), und einen flüssigen Elektrolyten enthält;
Bereitstellen einer Metallschicht (109, 1081), die am Rand des konkaven Gefäßes (101) angeordnet ist;
Bereitstellen einer Dichtungsplatte (102) zum Abdichten des konkaven Gefäßes (101), wobei die Dichtungsplatte (102) einen Wärmeausdehnungskoeffizienten annähernd jenem des konkaven Gefäßes (101) aufweist; und **gekennzeichnet durch**
Binden des konkaven Gefäßes (101) und der Dichtungsplatte (102) über die Metallschicht (109, 1081) **durch** Parallelnaht-Widerstandsschweißen.

2. Verfahren zum Herstellen einer elektrochemischen Zelle nach Anspruch 1, wobei die Metallschicht (109, 1081) einen Metallring (109) und ein Hartlötmaterial (1081) umfasst und der Metallring (109) einen Wärmeausdehnungskoeffizienten annähernd jenem des konkaven Gefäßes (101) aufweist.

3. Verfahren zum Herstellen einer elektrochemischen Zelle nach Anspruch 1, wobei das konkave Gefäß (101) Keramik oder keramisches Glas umfasst.

4. Verfahren zum Herstellen einer elektrochemischen Zelle nach Anspruch 2, wobei der Metallring (109) eine Legierung umfasst, die Kobalt, Nickel und Eisen enthält, und das Hartlötmaterial (1081) ein Nickel- und/oder Goldfilm ist, der auf dem Metallring (109) gebildet ist.

5. Verfahren zum Herstellen einer elektrochemischen Zelle nach Anspruch 1, wobei die Dichtungsplatte (102) ein Metall umfasst, in dem ein Hartlötmaterial (1082) an der Oberfläche an der Seite gebildet ist, die mit dem konkaven Gefäß (101) gebunden ist.

6. Verfahren zum Herstellen einer elektrochemischen Zelle nach Anspruch 5, wobei das Metall der Dichtungsplatte (102) eine Legierung umfasst, die Kobalt, Nickel und Eisen enthält, und ein Hartlötmaterial (1082), das an der Oberfläche an der Seite gebildet ist, die mit dem konkaven Gefäß (101) gebunden ist, ein Nickel- und/oder Goldfilm ist.

7. Verfahren zum Herstellen einer elektrochemischen Zelle nach Anspruch 1, des Weiteren umfassend das Bereitstellen einer Stufe (110) im Inneren des konkaven Gefäßes (101) und das Anordnen des Separators (105) auf der Stufe (110).

8. Verfahren zum Herstellen einer elektrochemischen Zelle nach Anspruch 1, des Weiteren umfassend das Anordnen eines Elektrodenstromkollektors an einer Bodenfläche im Inneren des konkaven Gefäßes (101).

9. Verfahren zum Herstellen einer elektrochemischen Zelle nach Anspruch 8, wobei der Elektrodenstromkollektor ein Material umfasst, das vorwiegend Elemente umfasst, die ausgewählt sind aus Wolfram, Aluminium, Titan, Kohlenstoff, Palladium, Silber, Platin und Gold.

10. Verfahren zum Herstellen einer elektrochemischen Zelle nach Anspruch 8, des Weiteren umfassend das Bereitstellen einer Schicht (1111) mit Leitfähigkeit, die vorwiegend Kohlenstoff umfasst, an dem Elektrodenstromkollektor an der Bodenfläche im Inneren des konkaven Gefäßes (101).

11. Verfahren zum Herstellen einer elektrochemischen Zelle nach Anspruch 1, wobei der Separator (105) ein Vliesgewebe umfasst.

12. Verfahren zum Herstellen einer elektrochemischen Zelle nach Anspruch 1, wobei der Hauptbestandteil des Separators (105) Polyethylensulfid, Polyetheretherketon, Polyfluorharz oder Glasfasern umfasst.

13. Elektrochemische Zelle, umfassend:
paarweise Elektroden (106, 107) mit einer positiven Elektrode (106) und einer negativen Elektrode (107);
einen Separator (105) zum Trennen der positiven Elektrode (106) und der negativen Elektrode (107);
einen flüssigen Elektrolyten;
ein konkaves Gefäß (101), das die paarweisen Elektroden (106, 107), den Separator (105) und den flüssigen Elektrolyten enthält;
eine Metallschicht (109, 1081), die am Rand des konkaven Gefäßes (101) angeordnet ist;
eine Dichtungsplatte (102) zum Abdichten des konkaven Gefäßes (101), wobei die Dichtungsplatte (102) einen Wärmeausdehnungskoeffizienten annähernd jenem des konkaven Gefäßes (101) aufweist, und **dadurch gekennzeichnet, dass** das konkave Gefäß (101) und die Dichtungsplatte (102) über die Metallschicht (109, 1081) durch Parallelnaht-Widerstandsschweißen gebunden sind; und **gekennzeichnet durch**
einen positiven Elektrodenstromkollektor, der aus Aluminium besteht und an einer Bodenfläche im Inneren des konkaven Gefäßes (101) angeordnet ist, wobei die Bodenfläche der Dichtungsplatte (102) gegenüber liegt.

14. Elektrochemische Zelle nach Anspruch 13, wobei eine Schicht (1111) mit Leitfähigkeit, die vorwiegend Kohlenstoff umfasst, des Weiteren an dem positiven Elektrodenstromkollektor an der Bodenfläche im Inneren des konkaven Gefäßes (101) bereitgestellt ist.

15. Elektrochemische Zelle nach Anspruch 13, wobei der Separator (105) ein Vliesgewebe umfasst.

16. Elektrochemische Zelle nach Anspruch 13, wobei der Hauptbestandteil des Separators (105) Polyethylensulfid, Polyetheretherketon, Polyfluorharz oder Glasfasern umfasst.

## Revendications

1. Procédé de fabrication d'une cellule électrochimique comprenant les étapes suivantes :
fourniture d'un récipient concave (101) contenant une électrode positive (106), une électrode négative (107), un séparateur (105) pour séparer l'électrode positive (106) et l'électrode négative (107) et un électrolyte liquide ;
fourniture d'une couche métallique (109, 1081) disposée sur le bord du récipient concave (101) ;
fourniture d'une plaque d'étanchéité (102) pour sceller le récipient concave (101), la plaque d'étanchéité (102) ayant un coefficient de dilatation thermique proche de celui du récipient concave (101) ; et **caractérisée par**
la liaison entre le récipient concave (101) et la plaque d'étanchéité (102) via la couche métallique (109, 1081) grâce à un soudage par résistance à jointure parallèle ;

2. Procédé de fabrication d'une cellule électrochimique selon la revendication 1, la couche métallique (109, 1081) comprenant une bague métallique (109) et une matière d'apport de brasage (1081), et la bague métallique (109) possédant un coefficient de dilatation thermique semblable à celui du récipient concave (101).

3. Procédé de fabrication d'une cellule électrochimique selon la revendication 1, le récipient concave (101) comprenant de la céramique ou du verre céramique.

4. Procédé de fabrication d'une cellule électrochimique selon la revendication 2, la bague métallique (109) comprenant un alliage contenant du cobalt, du nickel et du fer, et la matière d'apport de brasage (1081) étant une pellicule en nickel et/ou or formée sur la bague métallique (109).

5. Procédé de fabrication d'une cellule électrochimique selon la revendication 1, la plaque d'étanchéité (102) comprenant un métal où une matière d'apport de brasage (1082) est formée à la surface sur le côté en liaison avec le récipient concave (101).

6. Procédé de fabrication d'une cellule électrochimique selon la revendication 5, le métal de la plaque d'étanchéité (102) comprenant un alliage contenant du cobalt, du nickel et du fer, et une matière d'apport de brasage (1082) formée à la surface sur le côté en liaison avec le récipient concave (101), étant une pellicule en nickel et/ou or.

7. Procédé de fabrication d'une cellule électrochimique selon la revendication 1, comprenant par ailleurs la fourniture d'un gradin (110) à l'intérieur du récipient concave (101) et la disposition du séparateur (105) sur le gradin (110).

8. Procédé de fabrication d'une cellule électrochimique selon la revendication 1, comprenant par ailleurs la disposition d'un collecteur de courant d'électrode sur une surface du bas à l'intérieur du récipient concave (101).

9. Procédé de fabrication d'une cellule électrochimique selon la revendication 8, le collecteur de courant d'électrode comprenant une matière comprenant essentiellement des éléments sélectionnés parmi le tungstène, l'aluminium, le titane, le carbone, le palladium, l'argent, le platine et l'or.

10. Procédé de fabrication d'une cellule électrochimique selon la revendication 8, comprenant par ailleurs la fourniture d'une couche (1111) ayant de la conductivité comprenant essentiellement du carbone sur le collecteur de courant d'électrode sur la surface du fond à l'intérieur du vaisseau concave (101).

11. Procédé de fabrication d'une cellule électrochimique selon la revendication 1, le séparateur (105) comprenant une étoffe non tissée.

12. Procédé de fabrication d'une cellule électrochimique selon la revendication 1, l'ingrédient principal du séparateur (105) comprenant du sulfure de polyphénylène, du polyéther-éthercétone, de la résine polyfluorée, ou de la fibre de verre.

13. Cellule électrochimique comprenant :
des électrodes appariées (106, 107) avec une électrode positive (106) et une électrode négative (107);
un séparateur (105) pour séparer l'électrode positive (106) et l'électrode négative (107) ;
un électrolytique liquide ;
un récipient concave (101) contenant les électrodes appariées (106, 107), le séparateur (105) et l'électrolyte liquide;
une couche métallique (109, 1081) disposée sur le bord du récipient concave (101) ;
une plaque d'étanchéité (102) pour sceller le récipient concave (101), la plaque d'étanchéité (102) possédant un coefficient de dilatation thermique proche de celui du récipient concave (101), et
**caractérisé en ce que** le vaisseau concave (101) et la plaque d'étanchéité (102) sont en liaison via la couche métallique (109, 1081) grâce à un soudage par résistance à jointure parallèle ; et **caractérisée par**
un collecteur de courant d'électrode positive formé en aluminium et disposé sur une surface du bas à l'intérieur du récipient concave (101), la surface du bas étant opposée à la plaque d'étanchéité (102).

14. Cellule électrochimique selon la revendication 13, une couche (1111) avec de la conductivité comprenant essentiellement du carbone étant par ailleurs fournie sur le collecteur de courant d'électrode positive sur la surface du bas à l'intérieur du récipient concave (101).

15. Cellule électrochimique selon la revendication 13, le séparateur (105) comprenant une étoffe non tissée.

16. Cellule électrochimique selon la revendication 13, l'ingrédient principal du séparateur (105) comprenant du sulfure de polyphénylène, du polyéther-éthercétone, de la résine polyfluorée, ou de la fibre de verre.
